# EUROPEAN PATENT SPECIFICATION

(11) **EP 1 518 909 B1**
(45) Date of publication and mention of the grant of the patent: **25.02.2015**
(21) Application number: 04255581.3
(22) Date of filing: 15.09.2004
(51) Int. Cl.: C09D 167/02, C08K 5/00

(54) **Polyester film**
Polyesterfilm
Film de polyester

(30) Priority: 16.09.2003 JP 2003322696; 01.04.2004 JP 2004108782
(43) Date of publication of application: 30.03.2005
(73) Proprietor: TORAY INDUSTRIES, INC., Tokyo (JP)
(72) Inventor: Matsui, Ryosuke, Otsu-shi, Shiga 520-0842 (JP); Manabe, Isao, Otsu-shi, Shiga 520-0842 (JP); Yoshida, Minoru, Shiga-gun, Shiga 520-0533 (JP)
(74) Representative: Sturt, Clifford Mark

(56) References cited:
- EP-A- 0 175 402
- EP-A- 0 856 567
- EP-A- 0 872 526
- GB-A- 1 389 677
- DATABASE CA [Online] CHEMICAL ABSTRACTS SERVICE, COLUMBUS, OHIO, US; 1986, MATSURA, KAZUO ET AL: "Electrophotographic photoreceptor" XP002311413 retrieved from STN Database accession no. 1986:139251 & JP 60 146249 A2 (TORAY INDUSTRIES, INC., JAPAN) 1 August 1985 (1985-08-01)

## Description

### BACKGROUND OF THE INVENTION

The present invention relates to polyester film that is especially used for packaging material, and particularly to polyester film that is preferably used for a food packing container by coloring polyester film with organic pigment.

Many significant characteristics, such as excellent mechanical strength, thermal property, and moisture characteristics, of polyethylene terephthalate bi-axially stretch film that represents polyester film allow its usage in various fields of application such as industrial material, magnetic recording material, optical material, information material, and packaging material.

Above all, the polyester film used for the packaging material is laminated with sealant layer such as polyethylene and polypropylene in the case of soft packaging, using or without using adhesive material. The sealant layer contacts directly with contents; therefore, it is atypical to consider the contact between the polyester film and the contents, and the polyester film is used for the outermost packaging of the container or the packaging material in many cases. Also, it is increasingly used for the coating of metal plate that is a substrate of metal container.

Under such circumstances, the demands for the packaging material have been diversified, varied and progressed in recent years, and for polyester film, which is used for the outermost packaging of the packaging material to be directly perceived by customers, visibility for customers and industrial design for the purpose of public relations of products have been strongly emphasized.

For example in the case of the external surface of metal containers, various thermosetting resin, such as epoxy series and phoenol series, have been solved or dispersed into the solvent and sprayed on the metal in order to prevent the quality of contents from changing, due to metal corrosion and to maintain glossy appearance. In general, the external surface of container is differentiated from other articles by printing directly or winding a paper and a film label around on which the content of the merchandise is printed (hereinafter, denoted as "industrial design"). For the purpose of differentiation, thermosetting resin mixed with pigment is applied on the surface of containers that is the substrate of exhibition. However, regarding such a coating method using the thermosetting resin as described above, there were unfavorable problems that productivity would be lowered since it took long hours to dry a coating material, environmental pollution was caused due to a great amount of organic solvent.

Therefore, there have conventionally been many proposals to realize an excellent industrial design. For example, a polyester film that contains colored pigment and dyestuff has been proposed for the external surface coating of a metal container (Japanese Patent Laid Open No. 1997-277477). However, in the case of the film proposed therein, dyestuff sometimes exudes from the film, resulting in color staining, or oligomer separates out onto the film surface, crystallizes, and becomes white powder, which sometimes deteriorates the appearance, in the process of sterilization that is caused by the wet heat treatment using pressurized steam.

Further, a polyester film provided with a printing layer for using as the external surface coating of the metal container (Japanese Patent Laid Open No. 1993-200939), and a film that contains a high density of white pigment (Japanese Patent Laid Open No. 1994-49234) have been proposed. However, these films were not considered to have an excellent industrial design because these were opaque and their appearances did not utilize the luster of metal itself that was used for the metal container. Furthermore, there are proposals to set the quantity of oligomer contained in the film to be less than a given concentration in the case of the coating film for the metal container (Japanese Patent Laid Open Nos. 1995-316317 and 1995-145252). However, these films are not excellent in industrial design when used for the external surface coating of the metal container because they were not colored.

Moreover, it has been suggested to add organic pigment to the external surface of metal-plate container for the purpose of creating industrial design and posh atmosphere, and to use yellow-colored film, which is transparent and has a certain color tone and yellowish taste at the same time. A container that shines in gold due to metallic luster by laminating the above film onto the metal plate has been proposed (Japanese Patent Laid Open Nos. 2001-301025 and 2003-26823). However, the issue of these proposals was the difficulty for stabilizing of the color tone due to the poor heat resistance of organic pigment when colored films were collected for reproduction and made into chips again to repeatedly conduct melt extrusion, depending on the type of coloring agent that is used.

EP856567 discloses a transparent powder paint which is obtained by dispersing various colouring agents in the polyester resin.

EP872526 discloses a transparent yellow powder paint which is prepared by dispersing a charge controlling agent in a binder resin.

GB1389677 discloses an electro-photographic recording material of an electrically conducting carrier and an applied photoconducting double layer consisting of a top layer and a base layer and containing a photo conductor, a blinder, a sensitizer and additives.

XP002311413 discloses a photoreceptor that consists of a conductive support and a photosensitive layer and contains a polymer binder and an organic photoconductor I.

EP175402 discloses a charge-transporting compound and a photoconductive element comprising a support and one or more layer containing at least a charge-transporting compound which is homogeneously distributed in a binder.

US5403879 discloses a polyester film comprising titanium compound, silica compound, fluorescent pigment and antistatic agent as additives. The film is a white-coloured, opaque film and has low gloss and can be used in manufacturing white boards, various magnetic cards, printing paper, packaging materials etc.

### SUMMARY OF THE INVENTION

The purposes of the present invention are to provide colored polyester film, in which color staining is avoided that is caused by the exudation phenomenon of pigment onto the film surface due to high temperature and wet/dry heat treatment of organic pigment in the polyester film for longer hours, and in which color-tone change is suppressed due to a repeated heating while the heat resistance of the pigment is weak, and to provide polyester film that suppresses the precipitation of oligomer and generating of crystallized white powder even when the film is sterilized under the dry and wet heat treatment, and that has an excellent appearance and industrial design as packaging material.

A polyester film according to the present invention is defined in claim 1.

### DETAILED DESCRIPTION OF THE PREFERED EMBODIMENTS

The polyester resin comprising the polyester film according to the present invention is the generic term of polymer molecule, in which monomer residues, which is a primary binding in the main chain, and the covalent bond binding monomer residues are composed of ester bond, and The polyester resin is usually obtained by polycondensation of dicarboxylic acid compound and dihydroxy compound, or dicarboxylic acid ester derivative and dihydroxy compound. The dicarboxylic acid compound comprises for example of aromatic dicarboxylic acid such as terephthalic acid, 2,6-naphthalene dicarboxylic acid, isophthalic acid, diphenyldicarboxylic acid, diphenylsulfone dicarboxylic acid, diphenoxy ethanedicarboxylic acid, 5-sodium sulfoisophthalic acid, and phthalic acid; aliphatic series dicarboxylic acid such as oxalic acid, succinic acid, adipic acid, sebacic acid, dimer acid, maleic acid, and fumaric acid; alicycle series dicarboxylic acid such as cyclohexane dicarboxylic acid; and hydroxy-carboxylic acid such as p-hydroxybenzoate. Further, the dicarboxylic acid ester derivative comprises of the ester compound of the dicarboxylic acid compound described above, such as dimethyl terephthalate, dimethyl terephthalate, terephthalic acid 2-hydroxyethyl methyl ester, 2,6-dimethyl naphthalene dicarboxylic acid, dimethyl isophthalate, dimethyl adipate, diethyl maleate, dimethyl dimmer acid. On the other hand, the hydroxy compound comprises for example of aliphatic series dihydroxy compound such as ethylene glycol, 1, 2-propanediol, 1,3-propanediol, 1,3-butanediol, 1,4-butanediol, 1,5-pentane diol, 1,6-hexanediol, and neopentyl glycol; polyoxy-alkylene-glycol such as diethylene glycol, polyethylene glycol, polypropylene glycol, and poly tetetramethylene glycol; alicycle dihydroxy compound such as 1,4-cyclohexane dimethanol; and aromatic series dihydroxy compound such as bisphenol A and bisphenol S. Above all, terephthalic acid, 2,6-naphthalene dicarboxylic acid, isophthalic acid, or dimethyl ester compound of these can be preferably used for dicarboxylic acid compound, and ethylene glycol, 1,3-propanediol, 1,4-butanediol, poly tetramethylene glycol, 1 and 4-cyclohexane dimethanol can be preferably used for dihydroxy compound. Above all, it is especially preferable to use polyethylene terephthalate, which is composed of terephthalic acid or dimethyl terephthalate and ethylene glycol.

The first polyester film according to the present invention has to contain 0.01 to 5 weight% of organic pigment with molecular weight 695 to 1,000, in the polyester resin layer (A).

Organic pigment is used as coloring agent in need of tinting while maintaining the transparency of polyester film; however it is more preferable that the molecular weight of the organic pigment that is added to the polyester resin is 700 to 900 in order to minimize the precipitation and color staining of organic pigment from the film, and color staining by migration. When the molecular weight of the organic pigments is less than 695, pigments are precipitated from inside of the film due to the heat treatment such as sterilization under a high temperature and longer hours, sometimes resulting in a color staining onto the bodies and clothes of customers if used as a packaging container. Further, when the molecular weight exceeds 1,000, the melt viscosity of polymer sometimes becomes too high at the time of melt extrusion in the fabrication of film. As for the organic pigment with the molecular weight 695 to 1,000, pigments such as Color-Index Pigment Yellow 16 (molecular weight 726), Color-Index Pigment Yellow 81 (molecular weight 754), Color-Index Pigment Yellow 93 (molecular weight 937), Color-Index Pigment Yellow 94 (molecular weight 957), Color-Index Pigment Yellow 95 (molecular weight 917), Color-Index Pigment Yellow 113 (molecular weight 795), Color-Index Pigment Yellow 124 (molecular weight 750), Color-Index Pigment Yellow 168 (molecular weight 920), Color-Index Pigment Yellow 169 (molecular weight 911), Color-Index Pigment Yellow 180 (molecular weight 732), Color-Index Pigment Orange 17 (molecular weight 792), Color-Index Pigment Red 42 (molecular weight 733), Color-Index Pigment Red 144 (molecular weight 826), and Color-Index Pigment Red 166 (molecular weight 794), Color-Index Pigment Blue 25 (molecular weight 793) can be cited. Above all, Color-Index Pigment Yellow and Color-Index Pigment Orange are more preferable in respect of color tone when using for packaging material. Further, Color-Index Pigment Yellow 180 is most preferably used in respect of color tone and heat resistance. In addition, as for yellow coloring agent used for polyester resin, for example, titanium yellow can be cited for inorganic pigment; however, the problems of titanium yellow are the light coloring of the yellow color and the specification of the film.

As for the yellow organic pigment for polyester resin, Color-Index Pigment Yellow 147 (molecular weight 600) of anthraquinone, Color-Index Pigment Yellow 110 (molecular weight 642) of isoindoline, Color-Index Pigment Yellow 138 (molecular weight 694) of quinaphthalone-based, and Color-Index Pigment Yellow 181 (molecular weight 499) of monoazo benzimidazolane, are known. But the pigment of anthraquinone has a significantly high heat resistance and an excellent color when added in the film; however, there are problems that the pigment is precipitated onto the surface of the film and the migration frequently occurs when performing a retort treatment. On the other hand, the color staining is not so serious as the pigment of anthraquinone when using Pigment Yellow 181 of isoindoline, quinaphthalone-based, and monoazo bends imidazolone; however, the slight color staining still occurs. Further, there are problems that the color tone is apt to be changed at the time of melt extrusion when manufacturing polyester film, and it is difficult to obtain films with a constant color tone, due to the poor thermal resistance Therefore these pigments not having a molecular weight of 695 to 1000 cannot be used as the colouring agent in the present invention.

Moreover, it is necessary that the polyester film according to the present invention has to contain 0.01 to 5 weight% of organic pigment in the film for the purpose of giving industrial design and posh atmosphere to the appearance of the packaging material. In order to obtain a predetermined color tone, it is preferable to add 0.1 to 1 weight% of the organic pigment, and 0.3 to 0.8 weight% is further preferable. When the amount of pigment to be added is 0.01 weight% or less, the effect of adding coloring agent is sometimes not clear, depending on the thickness of the film. On the other hand, the addition of 5 weight% or more results in the saturation of the change of color tone; furthermore, it results in the extremely high melt viscosity of the polymer, sometimes leading to the incapability of the melt extrusion.

In the colored polyester film according to the present invention, it is possible to improve the color staining caused by the migration from the film by using organic pigment that contains a certain amount of molecular weight, even when the polyester film is subjected to the retort treatment and dry heat treatment under higher temperature and longer time period; however, for the purpose of enhancing its effect, a laminated film in which at least one side of the layer with the organic pigment is laminated with a layer without the organic pigment is preferable. Further, it is preferable to laminate the layer without the organic pigment on both sides of the layer with the organic pigment, considering that it is usable without distinguishing two faces of the film. Furthermore, the laminated film is preferable in which the same polyester compositions are laminated on both sides of the layer with the organic pigment; however, different compositions are also acceptable. Moreover, the constitution of lamination is not limited to two or three layers. The laminated film, on which a layer comprising other polymer components is placed, is also acceptable.

In the laminated film, the lamination thickness of 0.1 to 3 µm is preferable since it is expected that the layers without organic pigment should block the exudate of coloring agent from the layers with organic pigment. The 0.2 to 2.5 µm thickness is more preferred, and the 0.5 to 2 µm thickness is further preferred. In case the lamination thickness exceeds 3 µm, the total thickness of the film is thickened when b* value is set at a predetermined value, or the concentration of the pigment that is added to the pigment-adding layer needs to be increased, sometimes leading to the problems in the view point of economy, productivity and workability.

The second polyester film according to the present invention needs to contain ethylene terephthalate unit as the primary constituent element, the polyester resin layer (A) composed of polyester resin including 1.5 to 8 mol% of copolymerization component, and 0.01 to 5 weight% of the organic pigment and 0.2 to 0.9 weight% of ethylene terephthalate cyclic trimer content in the layer (A).

With regard to the polyester resin layer (A) comprising the polyester film according to the present invention, the primary constituent element needs to be ethylene terephthalate unit, and it needs to comprise the polyester resin, in which copolymerisation component is copolymerized at 1.5 to 8 mol%. When the copolymerization ratio is less than 1.5 mol%, the crystallinity of the polyester resin is high, leading to the observable precipitation of the ethylene terephthalate cyclic trimer content, when performing a sterilization such as a retort treatment. Therefore, there is a problem that the appearance is spoiled when used as a packaging material. On the other hand, when the rate exceeds 8 mol%, the precipitation of the cyclic trimer content from the film is constrained; however, the content of the constituent of other lower molecular bodies sometimes increases. Therefore, when the films are applied on both inner and external surfaces of a metal container for usage, and the polyester resin with the copolymerization rate that exceeds 8 mol% is employed on the external surface, for example, the films composed of the polyester resin, which have the same degree of copolymerization rate, should be used, considering the balance such as formability of the film that is used for the inner surface of the metal container. As a result, a large amount of low-molecular-weight object elutes from the film into the contents that fill the metal container, causing a problem that the taste is deteriorated. The copolymerization rate is preferably 2 to 7 mol%, more preferably 2 to 6 mol%, and especially preferably 2 to 5 mol%.

The ethylene terephthalate unit, which is the primary constituent element of the polyester resin comprising the polyester resin layer (A) according to the present invention, can be obtained by polycondensation that is realized by the esterification reaction, or transesterified reaction of terephthalic acid or dimethyl terephthalate and ethylene glycol. The copolymerization of either dicarboxylic acid compound or dihydroxy compound is acceptable as the copolymerization component of the polyester resin comprising the polyester resin layer (A) according to the present invention. The more preferable copolymerization constituents are as follows. The dicarboxylic acid constituents include aromatic dicarboxylic acid such as isophthalic acid, phthalic acid, 2,6-naphthalene dicarboxylic acid, diphenyldicarboxylic acid, diphenylsulphon dicarboxylic acid, diphenoxy ethane dicarboxylic acid, and 5-sodium sulfoisophthalic acid; aliphatic series dicarboxylic acid such as oxalic acid, succinic acid, adipic acid, sebacic acid, dimmer acid, maleic acid, and fumaric acid; alicycle series dicarboxylic acid such as cyclohexylene dicarboxylic acid; hydroxy-carboxylic acid such as p-hydroxy-carboxylic acid; or ester derivative such as dimethyl ester of these dicarboxylic acid. Further, as for dihydroxy compound, the constituents include aliphatic series dihydroxy compound such as 1,2- propanediol, 1,3-propanediol, 1,3-butanediol, 1,4-butanediol, 1,5-butanediol, 1,6-hexanediol, and neopentyl glycol; polyoxyalkylene glycol such as diethylene glycol, polyethylene glycol, polypropylene glycol, and poly tetramethylene glycol; alicycle series dihydroxy compound such as 1,4-cyclohexane dimethanol; and aromatic dihydroxy compound such as bisphenol A and bisphenol S. In the dicarboxylic acid compound and dihydroxy compound above, it is preferable to use 2,6-naphtalane dicarboxylic acid or its dimethylester compound and 1,4-cyclohexane dimethanol, and it is especially preferable to use 1,4- cyclohexane dimethanol, when considering the viewpoint of anti-oligomer precipitation. Furthermore, two kinds and more of constituents of these dicarboxylic acid and dihydroxy compound can be used simultaneously as copolymerization constituent.

In the manufacturing of the polyester resin used in the present invention, a reaction catalyst and color protection agent can be used. As a reaction catalyst, for example, alkali metal compound, alkali earth metal compound, zinc compound, lead compound, manganese compound, cobalt compound, aluminum compound, antimony compound, titanium compound, germanium compound can be used, and phosphorus compound can be used as color protection agent; however, the usage is not limited to the above in the present invention.

Generally in an arbitrary stage before the manufacturing of polyester resin is completed, it is preferable to add antimony compound, germanium compound and/ or titanium compound as polymerization catalyst. In the case of germanium compound, for example, two methods can be used: a method in which germanium compound powder is added by itself, and a method in which germanium compound is solved and added into the constituent of dihydroxy compound that is a starting material of polyester.

The following can be used for the above methods: germanium dioxide, germanium hydroxide and germanium alkoxide compound such as germanium tetramethoxide, and germanium ethylene glycoxyde; germanium compound that contains phosphoric acid such as germanium phenoxide compound, phosphate germanium, and phosphorous germanium; and germanium acetate. Above all, the germanium dioxide is preferably used.

Further, there is no limitation in particular to the antimony compound; however, for example, oxide such as antimony trioxide, and antimony acetate can be used. Furthermore, there is no limitation in particular to the titanium compound; however, titanium tetra alkoxide such as titanium tetra ethoxide and titanium tetra butoxide can be preferably used.

There is no limitation in particular to the method, in which the polyester film according to the present invention is added with organic pigment and colored. It is acceptable to obtain the film by melting and mixing the polyester resin and the organic pigment at the time of film fabrication by a single melt extrusion. However, it is economically preferable to produce a master-batch that has a higher concentration than that of the coloring agent in the film in advance by mixing and melt extruding by the use of the twin-screw vent-type extruder, and to produce the film that has a predetermined concentration of the coloring agent by diluting it with the polyester resin that does not contain the coloring agent. A specific method for producing the master-batch will be explained as follows. For example, polyethylene terephthalate resin is frozen and crushed at a lower temperature, and after the coloring agent made of a predetermined amount of organic pigment is added to the powder type polyethylene terephthalate resin and uniformly mixed, it is supplied to the twin-screw vent-type extruder for melt kneading. At this moment, it is acceptable to add 0.01 to 1 weight% of stearyl stearate, magnesium stearate into the master-batch as the dispersion assistant of the coloring agent. The colored and kneaded resin is extruded in a strand-like state, and it is cut into a desired size by a cutter after being cooled and solidified in water to obtain the master-batch. Further, it is acceptable to perform a compound with the polyester resin to set the master-batch concentration at a predetermined level after a high-concentration pigment-added resin that contains 20 to 60 weight% of pigment is prepared in advance with a mixer such as a kneader by using amorphous polyester resin. In addition, with regard to the concentration of the coloring agent in the master-batch, it is preferable to set it at a higher concentration such as 30 weight% or higher from the economical viewpoint. However, from the viewpoint of avoiding the coloring dot along the longitudinal direction of the film caused by classification, 1 to 30 weight% of master-batch concentration is preferable, 2 to 20 weight% thereof is more preferable, and 5 to 20 weight% be especially preferable.

The organic pigments that are preferably used in the present invention are condensed azo-based, anthraquinone-based, iso-indolinone -based, quinaphthalone-based, benz imidazolon-based, diketopyrrolopyrrol-based. In the above organic pigments, the molecular weight is preferably 695 to 1,000 from the viewpoint of avoiding the precipitation of pigment onto the film surface at the time of heat treatment.

Further, it is necessary that the polyester resin layer (A) comprising the polyester film according to the present invention contains 0.2 to 0.9 weight% of ethylene terephthalate cyclic trimer. It is theoretically possible to set the content of the cyclic trimer to be less than 0.2 weight%; however, manufacturing cost becomes enormous, which causes the economical disadvantage. Further, if the content exceeds 0.9 weight%, the precipitation of the cyclic trimer and the crystallization can be observed when performing the sterilization by the retort treatment and dry heat treatment, resulting in the deterioration of appearance. The content of 0.3 to 0.85 weight% is preferable, and the content of 0.4 to 0.8 weight% is more preferable. In consideration of economy and heat resistance as well as usability of the film, 0.5 to 0.8 weight% is especially preferable.

In the method, in which the content of the ethylene terephthalate cyclic trimer content is within the above range, it is preferable to reduce the content of oligomer at the stage of raw resin prior to the film fabrication. In order to realize such reduction, there is a method in which a solid-phase polymerization reaction is performed under depressurization or in the atmosphere of inert gas at a temperature below the melting point. There are two other methods: a heat treatment is performed for the solidified resin in water, and oligomer is extracted from the resin that is solidified by the solvent. Among these methods, the solid-phase polymerization is the most preferable method.

The specific examples of the manufacturing method of the polyester resin according to the present invention are shown as follows. For example, in the manufacturing of polyethylene terephthalate, when adding antimony trioxide as a polymerization catalyst, 67 wt. pts. of ethylene glycol, which is dihydroxy compound, is added to 100 wt. pts. of dimethyl terephthalate, which is the ester formation derivative of dicarboxylic acid. 0.04 wt. pts. of magnesium acetate and 0.03 wt. pts. of antimony trioxide are added therein and heated gradually, while distilling methanol that is generated by the reaction out of the reaction system, and finally an transesterified reaction is performed at 220°C. Then, 0.025 wt. pts. of water solution that contains phosphoric acid 85 % is added, heated gradually, and depressurized, finally until 290 °C and 1 hPa. The polyethylene terephthalate resin can be obtained by performing polycondensation reaction until a desired intrinsic viscosity is achieved. Further, it is acceptable to adopt a method in which the obtained resin is subjected to solid polymerization reaction under depressurization or in the atmosphere of inert gas at a temperature below its melting point, reducing the content of acetic aldehyde to obtain a given intrinsic viscosity and carboxyl terminal group. In addition, from the viewpoint of formability, aging and adhesiveness with a metal plate, 20 to 50 x 10⁻³ equivalent weight/kg is preferable for the content of carboxy terminal groups.

Further, regarding the polyester film according to the present invention, it is preferable that polyester layer (B) with a water absorption rate of 0.3 weight% or higher is laminated on at least one side of the polyester resin layer (A) that contains the organic pigment, in order to constrain white dots that are generated by inhomogeneous voids in the film, when performing the retort treatment, which is a sterilization by pressurized steam. It is more preferable that the water absorption rate is 0.5 weight% or higher. An upper limit is not restricted in particular; however, 10 weight% and lower is preferable. The method in which the water absorption rate is 0.3 weight% or higher is not limited in particular; however, the preferable method is to copolymerize the copolymerization constituents that have a polar group such as sulfon, hydroxy and amide, polyoxyalkylene glycol. Above all, it is preferable to use the polyester resin having 1 to 20 mol% of residue that contains sulfonic-acid alkali-metal salts.

Regarding the polyester resin comprising the polyester resin layer (B) containing residue that contains sulfonic-acid alkali-metal salts, it is preferable to include 1 to 15 mol% of residue that contains sulfonic-acid alkali-metal salts from the viewpoint of productivity, economy and the handling of the film, and it is especially preferable to include 3 to 10 mol%. When the content of the residue that contains sulfonic-acid alkali-metal salts is less than 1 mol%, the film is sometimes whitened at the time of retort treatment, resulting in the generation of colored irregularity. Further, when the content exceeds 20 mol%, the handling of polyester resin sometimes becomes difficult.

The residue that contains sulfonic-acid alkali-metal salts is ester mold sulfonic-acid alkali-metal salts, such as 5-sulfoisophthalic acid, 4-sulfoisophthalic acid, 2-sulfoisophthalic acid, alkali-metal salts of sulfoterephthalic acid, and the ester formation derivative of the above. Above all, sodium salts, calcium salts or lithum salts of 5-sulfoisophthajic acid or sulfoterephthalic acid are preferable for use, from the viewpoint of handling.

Regarding the polyester resin comprising the polyester resin layer (A) of the polyester film according to the present invention, it is preferable that the intrinsic viscosity is 0.5 to 0.8. When the intrinsic viscosity is less than 0.5, the forming and impact resistance of the film are sometimes poor. On the other hand, when the intrinsic viscosity exceeds 0.8, the moldability is poor in the secondary fabrication of the film into packaging container, and the content of the low molecular weight compound in the film increases due to the generation of the shear heat in the extruder at the time of melt extrusion, sometimes causing the precipitation of the oligomer easily. From the viewpoint of film handling, the preferable range of the intrinsic viscosity is 0.55 to 0.75, and the more preferable range is 0.6 to 0.7.

Further, it is preferable that the intrinsic viscosity of the polyester resin comprising the polyester resin layer (B) is lower than that of (A) by 0.01 to 0.2. If the intrinsic viscosity of the polyester resin comprising the polyester resin layer (B) is higher than that of (A), the resin layer (B) does not spread in the T-die when the polyester resin comprising the resin layer (A) and the polyester resin comprising the resin layer (B) are laminated in the feed block located on the upper part of the die and extruded in a sheet-like state to the T-die. It is laminated only in the center of the sheet, sometimes resulting in lamination thichness irregularitys, because the viscosity of the polyester resin comprising the layer (B) becomes exceedingly large when melted. This is because the interaction between molecular chains is considered to be stronger to result in a higher viscosity at the time of melting since the polyester resin comprising the polyester resin layer (B) has a higher concentration of polar group in the resin in order to enhance the water absorption rate. On the other hand, when the intrinsic viscosity is lower than that of the polyester resin comprising the resin layer (A) by larger than 0.2, the usability and the film characteristics after the fabrication becomes poor. It is preferable that the intrinsic viscosity of the polyester resin comprising the resin layer (B) is lower than that of the polyester resin comprising the resin layer (A) by 0.01 to 0.05, and especially preferable by 0.05 to 0.15.

It is preferable that the absolute value of the intrinsic viscosity of the polyester resin comprising the polyester resin layer (B) is 0.45 to 0.65. A preferable content of carboxyl terminal groups of the polyester resin comprising the resin layer (A) and (B) is 20 to 50 x 10⁻³ equivalent weight/kg from the viewpoint of formability, variation per hour and adhesiveness with the substrate.

Furthermore, in order to enhance the characteristics of the polyester film according to the present invention, it is preferable that the polyester resin comprising the polyester resin layer (B) copolymerizes with 0.1 to 10 weight% of polyethylene glycol, whose number average molecular weight is 400 to 10000 and include it. When the number average molecular weight is less than 400, the effect of addition sometimes becomes poor. Moreover, when the molecular weight exceeds 10,000, the viscosity reducing effect by copolymerising polyethylene glycol is set off, and the lamination thickness spots along the width direction of the film are sometimes deteriorated. In addition, when the copolymerization amount is less than 0.1 weight%, the above effect caused by the addition is sometimes not observed. On the contrary, when the addition exceeds 10 weight%, glass transition temperature is lowered, and the crystallinity of resin is also significantly lowered, sometimes causing a disadvantage to the handling of the polyester resin. From the above mentioned viewpoint, the preferable number average molecular weight of polyethylene glycol is 600 to 6,000, and more preferably 600 to 3,000. In addition, the preferable copolymerization amount of polyethylene glycol is 0.2 to 7 weight%, and more preferably 0.2 to 5 weight%.

When producing a laminated film with the polyester film according to the present invention, the preferable lamination thickness ratio (the thickness of resin layer (A) / total thickness) is 0.5 to 1. From the viewpoint of film fabrication, the more preferable lamination thickness ratio is 0.6 to 0.95, and especially preferably 0.7 to 0.9. Further, the preferable total thickness of the film is 5 to 250 µm, regardless of whether the film is single or multi layer. When considering that the film is fabricated into packaging container after being bonded to the substrate, it is preferable that the thickness is 5 to 30 µm, and more preferably 7 to 30 µm. The thickness of 8 to 20 µm is further preferable, and 10 to 20 µm is especially preferable.

As already stated, it is preferable that polyester layer (B) with the water absorption rate of 0.3% or higher is laminated on at least one side surface of the polyester resin layer (A) that contains the organic pigment, regarding the polyester film according to the present invention. However, the configuration of lamination is not limited to this, and the laminated film, on which resin layer (C) comprising other polymer molecule constituents is placed, is acceptable. However, the resin layer (A) that contains the organic pigment alone sometimes causes the generation of colored irregularity after the retort sterilization, and on the contrary, the resin layer (B) alone causes concave portions on the film surface due to the steam of retort. Therefore, both of the above sometimes cause the poor appearance. Accordingly, an A/B-type two-layer film is preferable because the appearance is sometimes spoilt in the case of a B/A/B three-layer-laminated film, in which resin layers (B) are laminated on both surfaces of resin layer (A). Further, it is preferable that the side of the resin layer (B) is the bonding surface when it is bonded with the substrate and used.

Regarding the polyester film according to the present invention, it is preferable that the L* value, in the L*a*b* color system of the film that is measured by the transparency method, is 80 to 95 from the viewpoint of industrial design. The more preferable L* alue is 90 to 95. Within the range of the value above, a transparent and picturesque appearance can be utilized. When the L* value is less than 80, not only the unequal concentration of the coloring agent, but also the colored irregularity, due to the thickness change that is caused by the molding and working, sometimes become noticeable. Further, not only the concentration of added pigment is higher, being uneconomical, but also the melting viscosity of the polymer at the time of melt extrusion sometimes becomes too high. On the other hand, when trying to set the L* value to be higher than 95, it is necessary to reduce the amount of addition of the organic pigment, or reduce the thickness of the film. Especially in the latter case, when it is used as packaging material, problems may occur in respect of the protection of the content and usability. The measurement of the L* value in the L*a*b* color system in this case is based on JIS Z 8722-2000, and the transparent measurement was performed by using a sheet of film.

Further, regarding the polyester film according to the present invention, it is preferable that the b* value should be 10 to 40 in the L*a*b* color system from the viewpoint of the industrial design as packaging material. The b* value 10 to 35 is more preferable, 10 to 30 is further preferable, and 15 to 30 is especially preferable.

Furthermore, it is preferable that the a* value in the L*a*b* color system is 12 to 0 from the viewpoint of the appearance when it is used as the packaging material. The more preferable a* value is -10 to -2. In order to control the L* value, the a* value and the b* value in the L*a*b* color system to be within the above preferable range, the kind of the coloring agent and the amount of addition have to be adjusted.

Regarding the polyester film according to the present invention, it is preferable that it contains 0.01 to 3 weight% of inner particle, inorganic particle and/or organic particle, whose average particle diameters are 0.01 to 10um in order to improve usability and workability. As for the precipitation method of the inner particle, techniques that are described in, for example, Japanese Patent Laid Open Nos. 1973-61556, 1976-12860, 1978-41355, 1979-90397, can be adopted. Further, other particles described in the Japanese Examined Patent Publication No. 1980-20496, Japanese Patent Laid Open No. 1984-204617, can be used simultaneously.
In addition, it must be noted that defects may be caused in the film when using particles, whose average particle diameters exceed 10 µm. As for the inorganic particles, for example, wet or dry silica, colloidal silica, aluminum silicate, titanium oxide, calcium carbonate, calcium phosphate, barium sulfate, aluminum oxide, mica, kaoline, and clay can be used. The organic particles may comprise styrene, silicone, acrylic acid compounds, methacrylic acid compounds, polyesters, or divinyl compounds. Among these, preferred are inorganic particles, such as wet or dry silica and alumina, and organic particles comprising styrene, silicone, acrylic acid compounds, methacrylic acid compounds, polyesters, or divinylbenzene. Furthermore, two or more kinds of these inner particles, inorganic particles and organic particles can be used simultaneously.

The production method of the polyester film according to the present invention is not limited in particular; however, the polyester resin is for example mixed so that the film becomes a desired composition, dried under nitrogen or vacuum atmosphere at 150°C for four hours for example, then supplied to the extruder and melted. When using a twin-screw vent-type extruder, dry process can be abbreviated. The resin melted by the extruder is subjected to the elimination of foreign substances and the balancing of the amount of extrusion through a filter and a gear pump, and it is released on the cooling drum in a sheet-like state from the T-die, so that an un-stretched sheet is obtained. There are various methods for making the polymer that is released from the T-die contact with the cooling drum: a method of applying an electrostatic by utilizing wire electrode and tape-type electrode, a method of establishing a water membrane between the cooling drum and the extruded polymer sheet, a method of adhesion at the temperature of the cooling drum set to be around approximately 20 °C higher or lower than the glass transition temperature of the extruded polymer, or a combination of more than one of these methods. The un-stretched sheet can be obtained by these methods. Above all, the method of applying an electrostatic is preferably used from the view point of productivity and the planarity as well as uniformity of the film. The un-stretched sheet obtained thereby can be wound and used as it is; however, it is preferable to process it into the bi-axial stretching for the purpose of enhancing the toughness, dimensional stability, heat resistance and mechanical strength of the film. Regarding the biaxial stretching method, there are two methods of stretching: a sequential biaxial stretching method, in which after the film is stretched in the width direction, it is stretched longitudinally, and vise versa, and a simultaneous biaxial stretching method, in which the film is stretched in the longitudinal and the width direction almost at the same time.

In such stretching methods, the preferably adopted stretching ratio is 1.6 to 4.2 times in each direction, and more preferably 2.4 to 4 times. The stretching speed is preferably 1,000 to 200,000 %/minute. The stretching temperature is not specified as long as it is within the temperature range of the glass transition of polyester to (glass transition temperature + 100°C ); however, it is preferably at 80 to 170°C, and it is especially preferably at 90 to 150°C for the stretching temperature of the longitudinal direction and at 100 to 150°C for the width direction. In order to give an extremely excellent formability to the film, it is preferable that the stretching temperature in the longitudinal direction is 100 to 130°C. Especially in the case of the longitudinal stretching, it is preferable to preheat at the temperature of 100°C or higher for approximately 1 to 100 seconds, which is within the extent that crystallization should not occur, and to stretch thereafter, in respect of an excellent planarity by a homogeneous stretching and the expression of an excellent formability by the restraint of orientation unevenness. The stretching can be performed in each direction for several times.

Furthermore, the heat treatment of the film can be performed after the biaxial stretching. The heat treatment can be performed by the conventionally well-known arbitrary method such as in the oven and on the heated roll. The temperature of the heat treatment is not specified as long as it is within the range from the stretching temperature to the melting point of the employed resin; however, it is preferable that the temperature of the heat treatment is 160 to 235°C in respect of moldability and impact resistance. The impact resistance is sometimes lowered when the temperature is lower than the preferred range in the above, and the moldability is sometimes deteriorated when it is higher. In respect of the impact resistance after molding, 160 to 220°C is more preferable, and 170 to 210°C is further preferable. Moreover, the heat treatment time period is not specified as long as it does not negatively affect other characteristics; however, 1to 30 seconds is usually preferable. Additionally, the film can be relaxed along the longitudinal and/or the width direction for the heat treatment.

The polyester film according to the present invention can be preferably used for the application of packaging material because of its appearance. Accordingly, it can be preferably used as gas barrier packaging material by vaporizing metal compound such as aluminum and metal oxide such as alumina and silica on the film and laminating aluminum foil. An un-stretched film, such as polyethylene and polypropylene, can be directly or indirectly laminated as sealant by adhesive agent or subjected to extrusion lamination. Further, it is preferable to use the film by molding it into containers after it is laminated with the substrate such as a metal plate, a plastic sheet, and paper. Especially, it is preferable to use it for covering the outer surface of the metal can, which is composed of two pieces manufactured by draw forming and ironing after it is laminated on metal plate because the significant industrial design possessed by the polyester film according to the present invention can be.

### EXAMPLE

### (Properties and Evaluation)

Properties of polymer and film, and the characteristics of film-processed goods were measured and evaluated by the following methods.

### (1) The melting temperature of polyester film (Tm)

Film 5 mg was check-weighed, and measured by a differential scanning calorimeter (Seiko Instruments Inc. made, RDC220) at the programming rate of 20°C C/minute from room temperature to 300°C, and the peak temperature of melting was defined as a melting point (Tm).

### (2) Color tone (L* value, a* value, b* value)

Based on JIS Z 8722-2000, a sheet of film was measured by the transparency method by using spectrophtometer (Nippon Denshoku Industries made, SE-2000, Light source Halogen lamp, 0°- 45°. Post-spectrum photometry), and the L* value, a* value and b* value were obtained. In addition, arbitrary five points of the film were selected and measured in each experiment, and their average was adopted.

### (3) Lamination thickness ratio

The cross-sections of the film were observed by ultramicrotomy by utilizing a transmission electron microscope with the acceleration voltage of 100 kV, the layer boundary was determined, and the lamination thickness was obtained. In the measurement of each experiment, arbitrary five points in the center of the width direction of the film were observed with the scale factor 20,000 times, and the lamination thickness rate was obtained from their average value. Additionally, regarding the total thickness of the film, arbitrary five points were measured by using dial gauge and their average value was adopted.

### (4) Content of carboxyl terminal groups

Content of carboxyl terminal groups was measured by solving polyester or film into ortho chlorophenol / chloroform (weight ratio 7/3) at the temperature of 100°C for 20 minutes, and by performing potentiometric titration by the use of potassium hydroxide.

### (5) Intrinsic viscosity

The intrinsic viscosity was measured at 25°C by solving polyester into ortho chlorophenol and using Ostwald viscosity meter. Additionally, sampling was performed by chipping off each layer individually when taking samples from the laminated film.

### (6) Ethylene terephthalate cyclic trimer content in the layer (A)

In the case of a single layer film, ethylene terephthalate cyclic trimer content was measured by solving 100 mg of the film into 1 ml of ortho chlorophenol and using liquid chromatography. Additionally, in the case of a laminated film, sampling was performed by chipping off only the layer (A), and the samples were measured.

### (7) Content of residue that contains sulfonic acid alkali metal salts

The peak intensity of sulfur that is contained in the sulfonic acid group was obtained by utilizing fluorescent X-ray measurement, and the content of sulfur was determined by preparing the relation between the peak intensity and analytical curve in advance. The content of residue that contains sulfonic acid alkali metal salts was calculated from the content of sulfur. Additionally, structure and content can be determined by using ¹H-NMR and ¹³C-NMR after solving the resin into good solvent such as hexafluoroisopropanol (HFIP) or the mixed solvent of HFIP and chloroform when the structure of the residue that contains sulfonic acid alkali metal salts is not identified.

### (8) Water absorption

To the film weight w1 that was obtained by performing vacuum drying of the polyester film at 24°C for 12 hours, the film weight w2 was obtained by leaving the same film as the film weight w1 at 60°C in the atmosphere of 80% relative humidity for 72 hours, and water absorption rate was defined as ((w2-w1)/w1)x100 (%). Additionally, the values w1 and w2 were read out one minute after they were taken out of the processing atmosphere. Regarding the water absorption rate of the intended layer in the laminated film, the intended part was chipped off from the laminated film to measure the water absorption rate of the film fragment.

### (9) Concentration of organic pigment

After solving the film into hexafluoroisopropanol (HFIP), the concentration of the coloring agent was measured by using ¹H-NMR and ¹³C-NMR. Additionally, in the case of the laminated film, quantity was determined through the measurement by chipping off the layer that contains organic pigment. Further, the identification of organic pigment can be performed by obtaining the Raman band from the pigment in the film by changing the excitation wavelength using the resonance Raman effect in the Raman scattering spectroscopy, and by comparing it with the Raman band of the pigment standard sample.

### (10) Dry-heat resistive precipitation method

The film was laminated with tin-free steel sheet (0.22 mm thick) heated at 280°C at the rate of 40 meter / minute, and rapidly cooled in 30°C water to produce film-laminated steel sheet. The steel sheet was set in the hot air oven, and dry heating was performed at 150°C for 30 minutes. After that, the surface of the laminated film was wiped up with an industrial wiper (KIMWIPES (Crecia Corporation made, Wiper S-200)) while 3 kg force was applied thereto, and the evaluation was performed according to the following standards. Additionally, in the case of the two-layered laminated film, in which a layer that contains organic pigment and a layer without it were laminated, lamination was performed so that the layer that contains pigment was bonded with the steel sheet, and the evaluation was performed.
Noughts : the color of the coloring agent was not attached to the wiper as a result of the visual inspection
Crosses : the color of the coloring agent was attached to the wiper as a result of the visual inspection

### (11) Wet-heat resistive precipitation method (1)

The film was laminated with tin free steel sheet (0.22 mm thick), heated at 280°C at the rate of 40 meter / minute, and rapidly cooled in water at room temperature to produce film-laminated steel sheet. The steel sheet was set in the retort sterilizer, and retort treatment was performed at 125°C for 1 hour. After that, the surface of the laminated film was wiped up with an industrial wiper (KIMWIPES (Crecia Corporation made, Wiper S-200)) while 3 kg force was applied thereto, and the evaluation was performed according to the following standards. Additionally, in the case of the two-layered laminated film, in which a layer that contains organic pigment and a layer without it were laminated, lamination was performed so that the layer that contains pigment was bonded with the steel sheet, and the evaluation was performed.
Noughts : the color of the coloring agent was not attached to the wiper as a result of the visual inspection
Crosses : the color of the coloring agent was attached to the wiper as a result of the visual inspection

### (12) Wet-heat resistive precipitation method (2)

The film was laminated with tin-free steel sheet ( 0.24 mm thick) heated at 285°C at the rate of 40 meter / minute, and rapidly cooled to produce film-laminated steel sheet. The steel sheet was set in the retort sterilizer, and retort treatment was performed at 125°C for 3 hours. After that, the surface of the laminated film was wiped up with an industrial wiper (KIMWIPES (Crecia Corporation made, Wiper S-200)) while 3 kg force was applied thereto, and the evaluation was performed according to the following standards. Additionally, in the case of the two-layered laminated film, in which a layer that contains organic pigment and a layer without it were laminated, lamination was performed so that the layer that contains pigment was bonded with the steel sheet, and the evaluation was performed.
Noughts : the color of the coloring agent was not attached to the wiper as a result of the visual inspection
Crosses : the color of the coloring agent was attached to the wiper as a result of the visual inspection

### (13) Heat resistance of pigment

Film is crushed, re-pelletized, supplied to the melt extruder after being dried again, and subjected to melt extrusion at 280°C. Unstretched sheet is obtained by casting the polymer that is discharged from the T-die on the cooling roller. Then, the film was repeatedly made into chips and sheet, and the change in color tone, which resulted from the repetition of melt extrusion was evaluated by the visual inspection.
Class A: No change in color tone after the repetition of melt extrusion for five times
Class B : Color tone was changed when compared with the sheet that is subjected to the repetition of melt extrusion for five times
Class C : Change of color tone was observed by the re-melt extrusion for twice Class D : Change of color tone was observed by the re-melt extrusion for once (14) Retort-repellent color change characteristics

Like the above evaluation of resistive precipitation, a sample container with contraction ratio 1.5 was produced by using an ironing-molding machine after being laminated with metal plate. Water at room temperature is put into the obtained sample container, and retort treatment was performed in the retort iron pot at 125°C for 10 minutes. After that, regarding the external surface of the container, evaluation was performed according to the following standard.
Noughts : No change was observed in the film as a result of the retort treatment.
Crosses : Polka-irregularity patch that appeared on the film and color tone became patchy as a result of the retort treatment.

### (Production of polyester)

Polyester resin employed in the following experiments were produced as follows.

### (Polyester A)

A mixture of 100 wt. pts of dimethyl terephthalate and 70 wt. pts. of ethylene glycol were added with 0.04 wt. pts. of manganese acetate, relative to dimethyl terephthalate. This mixture was heated gradually, and transesterified reaction was performed by conventional means, while distilling methanol finally at 220°C. Then, 0.025 pts.wt. of water solution that contains phosphoric acid 85% and 0.02 pts.wt. of germanium dioxide were added therein, gradually heated and depressurized finally until 290°C and 70 Pa, and polycondensation was performed until the intrinsic viscosity became 0.67. Polyethylene terephthalate resin was obtained thereafter by discharging the mixture in a strand-like, cooling, and cutting.

### (Polyester B)

A mixture of 100 wt. pts. of dimethyl terephthalate, 8 wt. pts. of 5-dimethyl sodium sulfon isophthalic acid, and 82 wt. pts. of ethylene glycol were added with, 0.06 wt. pts. of magnesium acetate, 0.16 wt. pts. of lithium acetate, and 0.04 wt. pts. of antimony trioxide, relative to dimethyl terephthalate. This mixture was heated gradually, and transesterified reaction was performed by conventional means, while distilling methanol finally at 220°C. Then, 0.045 pts.wt. of water solution that contains phosphoric acid 85% and 1.1 wt. pts. of polyethylene glycol of number average molecular weight 1,000 were added therein, gradually heated and depressurized finally until 290°C and 70 Pa, and polycondensation was performed until the intrinsic viscosity became 0.67. Polyethylene terephthalate resin, which was copolymerized with 5 mol% of 5-sulfoisophthalic acid, was obtained thereafter by discharging the mixture in a strand-like state, cooling, and cutting.

### (Particle master a)

A mixture of 100 wt. pts. of dimethyl terephthalate and 70 wt. pts. of ethylene glycol were added with, 0.04 wt. pts. of magnesium acetate, relative to dimethyl terephthalate. This mixture was heated gradually, and transesterified reaction was performed by conventional means, while distilling methanol finally at 220°C. Then, 0.025 pts.wt. of water solution that contains phosphoric acid 85% and 0.02 wt. pts. of germanium dioxide were added. Further, ethylene glycol slurry, which is the agglomerated silica particle with an average secondary particle diameter 2.2 µm, is added therein so that the particle concentration would be 2 weight%, gradually heated and depressurized finally until 290°C and 70 Pa, and polycondensation was performed until the intrinsic viscosity became 0.63. The particle master was obtained thereafter by discharging the mixture in a strand-like state, cooling, and cutting.

### (Pigment master 1)

Polyester A was frozen and crushed into powder type, added with 5 weight% of benz imidazolon-based pigment Ccolor-Iindex Pigment Yellow 180, the organic pigment, (Clariant International Ltd. made, PV Fast Yellow HG, molecular weight 732) as coloring agent. This mixture was mixed evenly, and supplied to the twin-screw vent-type extruder thereafter. It was subjected to melt kneading and extruded in a strand-like state. Pigment master 1 was obtained by cutting it into chips after cooling it in water.

### (Pigment master 2)

PET-G GN071 made by Eastman Chemical Company was frozen and crushed into 60 wt. pts. of powder type, and added with 40 wt. pts. of organic pigment Color-Index Pigment Yellow 180 (Clariant International Ltd. made, PV Fast Yellow HG, molecular weight 732). Pre-master was obtained by kneading the mixture at 110°C , by using a kneader. Then, the pre-master and the polyester A described above were crushed, mixed so that the pigment concentration in the resin would be 10 weight%, and supplied to the twin-screw vent-type extruder. It was subjected to melt kneading and extruded in a strand-like state. Pigment master 2 was obtained by cutting it into chips after cooling it in water.

### (Pigment master 3)

Polyester A was frozen and crushed into powder type, added with 5 weight% of anthraquinone-based pigment Color-Index Pigment Yellow 147, the organic pigment, (Clariant International Ltd. made, Polysynthren Yellow NG, molecular weight 500) as coloring agent, and 0.5 weight% of stearyl acid magnesium as a dispersing agent. This mixture was mixed evenly, and supplied to the twin-screw vent-type extruder thereafter. It was subjected to melt kneading and extruded in a strand-like state. Pigment master 3 was obtained by cutting it into chips after cooling it in water.

### (Pigment master 4)

Polyester A was frozen and crushed into powder type, added with 5 weight% of iso-indolinone-based pigment Color- Index Pigment Yellow 110, the organic pigment, (Nagase & Co., Ltd. made, Cromophtal Yellow 2RLP, molecular weight 642) as coloring agent. This mixture was mixed evenly, and supplied to the twin-screw vent-type extruder thereafter. It was subjected to melt kneading and extruded in a strand-like state. Pigment master 4 was obtained by cutting it into chips after cooling it in water.

### (Pigment master 5)

Polyester A was frozen and crushed into powder type, added with 3 weight% of iso-indolinone-based pigment Color-Index Pigment Yellow 110, the organic pigment, (Nagase & Co., Ltd. made, Cromophtal Yellow 2RLP, molecular weight 642) as coloring agent, and 2 weight% of quinaphthalone-based pigment Color-Index Pigment Yellow 138 (BSAF made, Paliotol Yellow K0961 HD, molecular weight 694). This mixture was mixed evenly, and supplied to the twin-screw vent-type extruder thereafter. It was subjected to melt kneading and extruded in a strand-like state. Pigment master 5 was obtained by cutting it into chips after cooling it in water.

### (Pigment master 6)

Polyester A was frozen and crushed into powder type, added with 5 weight% of Color-Iindex Pigment Yellow 181, the organic pigment, (Clariant International Ltd. made, PV Fast Yellow H3R, molecular weight 499) as coloring agent. This mixture was mixed evenly, and supplied to the twin-screw vent-type extruder thereafter. It was subjected to melt kneading and extruded in a strand-like state. Pigment master 6 was obtained by cutting it into chips after cooling it in water.

### (Pigment master 7)

Polyester A was frozen and crushed into powder type, added with 5 weight% of Color-Index Pigment Yellow 191, the organic pigment, (Clariant International Ltd. made, PV Fast Yellow HGR, molecular weight 527) as coloring agent, and 0.5 weight% of stearyl acid magnesium as a dispersing agent. This mixture was mixed evenly, and supplied to the twin-screw vent-type extruder thereafter. It was subjected to melt kneading and extruded in a strand-like state. Pigment master 7 was obtained by cutting it into chips after cooling it in water.

### Example 1

A two-layered laminated film was formed of a layer (layer A) containing organic pigments and a layer (layer B) not containing them.

As polyester for the layer A, a polyester A, a particulate master a and a pigment master 1 were used by blending in a ratio of 88:4:8 in weight. As polyester for the layer B, the polyester A and the particulate master a were used by blending in a ratio of 96:4 in weight.

Respectively blended polyester resins were independently dried at 180°C for 4 hours by a vacuum dryer for eliminating humidity sufficiently. The resins are then supplied to separate uniaxial extruders, melted at 280°C, let pass through a filter and a gear pump via respective passages for foreign matter elimination and extruded amount equalization and, thereafter, lamination as layer A/ layer B (layer thickness ratio 25:1) in a feed block installed in an upper part of a T die. The sheet-shaped layer A/B was discharged onto a cooling drum whose temperature is controlled at 25°C from the T-die. At this time, a wire-like electrode of 0.1 mm in diameter was used for electrostatic applying to contact with the cooling drum and an unstreched film was obtained.

Next, before the stretch in the longitudinal direction, the film temperature was raised by a heating roll. Subsequently, the film was finally stretched 3.2 times longer in the longitudinal direction at the film temperature of 105°C. Immediately after the stretch, the film was cooled by a metal roll whose temperature was controlled at 40 °C. The film was then stretched 3.2 times wider in the breadth direction by a tenter type lateral stretch machine at the pre-heating temperature of 95 °C and the stretch temperature of 120 °C. The film was subjected to the heat treatment at 210 °C for five seconds while relaxing by 4% in the breadth direction in the tenter machine, to obtain a biaxial orientated film of 13 µm in thickness.

The results of evaluation of thus obtained film are shown in table 1. The film of the present example showed excellent properties in that the pigments did not exude on the film surface even when dry heat or hyperthermic treatments were applied and, moreover, no color tone change was observed even when the melting and the extrusion were repeated.

### Example 2

As polyester for the layer A, a polyester A, a particulate master a and the pigment master 1 were used by blending in a ratio of 86:4:10 in weight. As polyester for the layer B, the polyester A and the particulate master a were used by blending in a ratio of 96:4 in weight.

Respectively blended polyester resins were independently dried at 180 °C for 4 hours by the vacuum dryer for eliminating humidity sufficiently. The resins are then supplied to separate uniaxial extruders, melted at 280 °C, let pass through the filter and gear pump via the respective passages for the foreign matter elimination and the extruded amount equalization and, thereafter, lamination as layer A/ layer B (layer thickness ratio 11:2) in the feed block installed in the upper part of the T die. The sheet-shaped layer A/B was discharged onto a cooling drum whose temperature is controlled at 25 °C from the T-die. At this time, the wire-like electrode of 0.1 mm in diameter was used for electrostatic applying to contact with the cooling drum and an unstreched film was obtained.

Next, before the stretch in the longitudinal direction, the film temperature was raised by the heating roll. Subsequently, the film was finally stretched 3.2 times longer in the longitudinal direction at the film temperature of 105 °C. Immediately after the stretch, the film was cooled by the metal roll whose temperature is controlled to 40 °C. The film was then stretched 3.2 times wider in the breadth direction by the tenter type lateral stretch machine at the pre-heating temperature of 95 °C and the stretch temperature of 120 °C. The film was subjected to the heat treatment at 210 °C for five secondsonds while relaxing by 4% in the breadth direction in the tenter machine, to obtain a biaxial orientated film of 13 µm in thickness.

The results of evaluation of thus obtained film are shown in table 1. The film of the present example showed excellent properties in that pigments did not exude on the film surface even when dry heat or hyperthermic treatments were applied and, moreover, no color tone change was observed even when the melting and the extrusion were repeated.

**[Table 1]**

| | | Example 1 | Example 2 |
|---|---|---|---|
| Layer A | Resin | Polyester A 88wt% | Polyester A 86wt% |
| | | Particulate master a 4wt% | Particulate master a 4wt% |
| | | Pigment master 1 8wt% | Pigment master 1 10wt% |
| | Pigment | C.I. Pigment Yellow 180 | C.I. Pigment Yellow 180 |
| | Thickness(µm) | 12.5 | 11 |
| Layer B | Resin | Polyester A 96wt% | Polyester A 96wt% |
| | | Particulate master a 4wt% | Particulate master a 4wt% |
| | Thickness(µm) | 0.5 | 2 |
| Film total thick. (µm) | | 13 | 13 |
| Film total pigment concentration | | 0.38 wt% | 0.42 wt% |
| Molecular weight of added organic pigment | | 732 | 732 |
| Layer composition | | A/B | A/B |
| Film melting temperature (°C) | | 256 | 256 |
| Color tone | L* value | 92 | 91 |
| | a* value | -6 | -7 |
| | b* value | 17 | 22 |
| Dry heat deposition resistance | | ○ | ○ |
| Wet-heat deposition resistance (1) | | ○ | ○ |
| Wet-heat deposition resistance (2) | | ○ | ○ |
| Heat resistance of pigment | | A | A |

### Example 3

As polyester for the layer A, a polyester A, a particulate master a and a pigment master 2 were used by blending in a ratio of 90:4:6 in weight. As polyester for the layer B, the polyester A and the particulate master a were used by blending in a ratio of 96:4 in weight.

Respectively blended polyester resins were independently dried at 180 °C for 4 hours by the vacuum dryer for eliminating humidity sufficiently. The resins are then supplied to separate uniaxial extruders, melted at 280 °C, let pass through the filter and gear pump via the respective passages for the foreign matter elimination and the extruded amount equalization and, thereafter, lamination as layer A/ layer B (layer thickness ratio 5:1) in the feed block installed in the upper part of the T die. The sheet-shaped layer A/B was discharged onto the cooling drum whose temperature is controlled at 25 °C. At this time, the wire-like electrode of 0.1 mm in diameter was used for electrostatic applying to contact with the cooling drum and an unstreched film was obtained.

Next, before the stretch in the longitudinal direction, the film temperature was raised by the heating roll. Subsequently, the film was finally stretched 3.2 times longer in the longitudinal direction at the film temperature of 105 °C. Immediately after the stretch, the film was cooled by the metal roll whose temperature was controlled to 40 °C. The film was then stretched 3.1 times wider in the breadth direction by the tenter type lateral stretch machine at the pre-heating temperature of 95 °C and the stretch temperature of 115 °C. The film was subjected to the heat treatment at 210 °C for five seconds while relaxing by 3% in the breadth direction in the tenter machine, to obtain a biaxial orientated film of 12 µm thickness.

The results of evaluation of thus obtained film are shown in table 2. The film of the present example showed excellent properties in that pigments did not exude on the film surface even when dry heat or hyperthermic treatments were applied and, moreover, no color tone change was observed even when the melting and the extrusion were repeated.

### Example 4 (not forming part of the present invention)

A single-layer film was formed and evaluated in the example 4.

As polyester, a polyester A, a particulate master a and the pigment master 1 were used by blending in a ratio of 86:4:10 in weight.

The blended polyester resins were dried at 170 °C for five hours by the vacuum dryer for eliminating humidity sufficiently. The resins are then supplied to the uniaxial extruder, melted at 280 °C, let pass through the filter and gear pump via the respective passages for the foreign matter elimination and the extruded amount equalization and, discharged in the sheet-shape onto the cooling drum whose temperature was controlled to 20 °C from the T-die. At this time, the wire-like electrode of 0.2 mm in diameter was used for electrostatic applying to contact with the cooling drum and an unstreched film was obtained.

Next, before the stretch in the longitudinal direction, the film temperature was raised by the heating roll. Subsequently, the film was finally stretched 3.2 times longer in the longitudinal direction at the film temperature of 105 °C. Immediately after the stretch, the film was cooled by the metal roll whose temperature was controlled at 40 °C. The film was then stretched 3.2 times wider in the breadth direction by the tenter type lateral stretch machine at the pre-heating temperature of 95 °C and the stretch temperature of 120 °C. The film was subjected to the heat treatment at 210 °C for five seconds while relaxing by 3% in the breadth direction in the tenter machine, to obtain a biaxial orientated film of 13 µm in thickness.

The results of evaluation of thus obtained film are shown in table 2. The film of the present example showed excellent properties in that pigments did not exude on the film surface even when dry heat treatment or 1 hour high retort treatment was applied and, moreover, no color tone change was observed even when the melting and the extrusion were repeated.

**[Table 2]**

| | | Example 3 | Example 4 |
|---|---|---|---|
| Layer A | Resin | Polyester A 90wt% | Polyester A 86wt% |
| | | Particulate master a 4wt% | Particulate master a 4wt% |
| | | Pigment master 2 6wt% | Pigment master 1 10wt% |
| | Pigment | C.I. Pigment Yellow 180 | C.I. Pigment Yellow 180 |
| | Thickness(µm) | 10 | 13 |
| Layer B | Resin | Polyester A 96wt% | |
| | | Particulate master a 4wt% | - |
| | Thickness(µm) | 2 | |
| Film total thick. (µm) | | 12 | 13 |
| Film total pigment concentration | | 0.5 wt% | 0.5 wt% |
| Molecular weight of added organic pigment | | 732 | 732 |
| Layer composition | | A/B | A (single film) |
| Film melting temperature (°C) | | 256 | 256 |
| Color tone | L* value | 91 | 91 |
| | a* value | -8 | -8 |
| | b* value | 23 | 23 |
| Dry heat deposition resistance | | ○ | ○ |
| Wet-heat deposition resistance (1) | | ○ | ○ |
| Wet-heat deposition resistance (2) | | ○ | × |
| Heat resistance of pigment | | A | A |

### Comparative Example 1

A two-layered laminated film of 13 µm in thickness was obtained similarly to the example 2 except that a pigment master 3 is used for the layer A and evaluated. The results of the evaluation are shown in a table 3. The pigment exudes heavily for the Color-Index Pigment Yellow 147, and the exudation was observed after the dry heat treatment of 30 minutes.

### Comparative Example 2

A two-layered laminated film of 13 µm in thickness was obtained similarly to the example 2 except that a pigment master 4 is used for the layer A and evaluated. The evaluation results are shown in table 3. No exudation of the Color-Index Pigment Yellow 147 was observed for the dry heat treatment of 30 minutes, however, the exudation was observed during the retort treatment. Moreover, the film had poor heat resistance, showing a significant change in its color tone due to the repeated melting and extrusion.

**[Table 3]**

| | | Comparative Example 1 | Comparative Example 2 |
|---|---|---|---|
| Layer A | Resin | Polyester A 86wt% | Polyester A 86wt% |
| | | Particulate master a 4wt% | Particulate master a 4wt% |
| | | Pigment master 3 10wt% | Pigment master 4 10wt% |
| | Pigment | C.I. Pigment Yellow 147 | C.I. Pigment Yellow 110 |
| | Thickness(µm) | 11 | 11 |
| Layer B | Resin | Polyester A 96wt% | Polyester A 96wt% |
| | | Particulate master a 4wt% | Particulate master a 4wt% |
| | Thickness(µm) | 2 | 2 |
| Film total thick. (µm) | | 13 | 13 |
| Film total pigment concentration | | 0.42 wt% | 0.42 wt% |
| Molecular weight of added organic pigment | | 600 | 642 |
| Layer composition | | A/B | A/B |
| Film melting temperature (°C) | | 256 | 256 |
| Color tone | L* value | 95 | 87 |
| | a* value | -10 | -2 |
| | b* value | 30 | 16 |
| Dry heat deposition resistance | | × | ○ |
| Wet-heat deposition resistance (1) | | × | × |
| Wet-heat deposition resistance (2) | | × | × |
| Heat resistance of pigment | | A | D |

### Comparative Example 3

A two-layered laminated film of 13 µm thickness was obtained similarly to the example 2 except that a pigment master 5 is used for the layer A and evaluated. The evaluation results are shown in the table 4. No exudation of the blended system of Color-Index Pigment Yellows 110 and 138 was observed for a dry heat treatment for 30 minutes, however, the exudation was observed during the retort treatment. Moreover, the film had poor heat resistance, showing a significant change in its color tone due to the repeated melting and extrusion.

### Comparative Example 4

A two-layered laminated film of 13 µm in thickness was obtained similarly to the example 2 except that a pigment master 6 is used for the layer A and evaluated. The evaluation results are shown in the table 4. No exudation of the Color-Index Pigment Yellow 181 was observed for the dry heat treatment of 30 minutes, however, exudation was observed during the retort treatment. Moreover, the film had poor heat resistance, showing a significant change in its color tone due to the repeated melting and extrusion.

**[Table 4]**

| | | Comparative Example 3 | Comparative Example 4 |
|---|---|---|---|
| Layer A | Resin | Polyester A 86wt% | Polyester A 86wt% |
| | | Particulate master a 4wt% | Particulate master a 4wt% |
| | | Pigment master 5 10wt% | Pigment master 6 10wet% |
| | Pigment | C.I. Pigment Yellow 110 | C.I. Pigment Yellow 181 |
| | | C.I. Pigment Yellow 138 | |
| | Thiekness(µm) | 11 | 11 |
| Layer B | Resin | Polyester A 96wt% | Polyester A 96wt% |
| | | Particulate master a 4wt% | Particulate master a 4wt% |
| | Thickness(µm) | 2 | 2 |
| Film total thick. (µm) | | 13 | 13 |
| Film total pigment concentration | | Yellow 110 0.25 wt% | 0.42 wt% |
| | | Yellow 138 0.17 wt% | |
| Molecular weight of added organic pigment | | 642/694 | 499 |
| Layer composition | | A/B | A/B |
| Film melting temperature (°C) | | 256 | 256 |
| Color tone | L* value | 94 | 91 |
| | a* value | -7 | -3 |
| | b* value | 20 | 14 |
| Dry heat deposition resistance | | ○ | ○ |
| Wet-heat deposition resistance (1) | | × | × |
| Wet-heat deposition resistance (2) | | × | × |
| Heat resistance of pigment | | D | C |

### Example 5

A three-layered laminated film of B/A/B composition was formed of a layer (layer A) containing organic pigments and layers (layer B) not containing the organic pigments.

As polyester for the layer A, a polyester A, a particulate master a and the pigment master 2 were used by blending in a ratio of 91:4:5 in weight. As polyester for the layer B, a polyester B and the particulate master a were used by blending in a ratio of 96:4 in weight.

Respectively blended polyester resins were independently dried at 180 °C for 4 hours by the vacuum dryer for eliminating humidity sufficiently. The resins are then supplied to separate uniaxial extruders, melted at 280 °C, let pass through the filter and gear pump via the respective passages for the foreign matter elimination and the extruded amount equalization and, thereafter, lamination as layer B/ layer A/ layer B (layer thickness ratio 1:11:1) in the feed block installed in the upper part of the T die. The sheet-shaped layer B/A/B was discharged onto the cooling drum whose temperature was controlled at 25 °C from the T die. At this time, the wire-like electrode of 0.2 mm in diameter was used for the electrostatic applying to contact with the cooling drum and an unstreched film was obtained.

Next, before the stretch in the longitudinal direction, the film temperature was raised by the heating roll. Subsequently, the film was finally stretched 3.2 times longer in the longitudinal direction at the film temperature of 105 °C. Immediately after the stretch, the film was cooled by the metal roll whose temperature was controlled at 40 °C. The film was then stretched 3.2 times wider in the breadth direction by the tenter type lateral stretch machine at the pre-heating temperature of 95 °C and the stretch temperature of 120 °C. The film was subjected to the heat treatment at 210 °C for five seconds while relaxing by 4% in the width direction in the tenter machine, to obtain a biaxial orientated film of 13 µm in thickness.

The results of evaluation of thus obtained film are shown in the table 5. The film of the present example showed excellent properties in that pigments did not exude on the film surface even when dry heat or hyperthermic treatments were applied and, moreover, no color tone change was observed even when the melting and the extrusion were repeated. Moreover, the film did not change even if the retort treatment is preformed in a state containing contents after the container formation.

### Comparative Example 5

As polyester for the layer A, a polyester A, a particulate master a and the pigment master 7 were used by blending in a ratio of 86:4:10 in weight. As polyester for the layer B, a polyester B and the particulate master a were used by blending in a ratio of 96:4 in weight.

Respectively blended polyester resins were independently dried at 180 °C for 4 hours by the vacuum dryer for eliminating humidity sufficiently. The resins are then supplied to separate uniaxial extruders, melted at 280 °C, let pass through the filter and the gear pump via the respective passages for the foreign matter elimination and the extruded amount equalization and, thereafter, lamination as layer B/ layer A/ layer B (layer thickness ratio 1:11:1) in the feed block installed in the upper part of the T die. The sheet-shaped layer B/A/B was discharged onto the cooling drum whose temperature is controlled to 25 °C from the T-die. At this time, the wire-like electrode of 0.2 mm in diameter was used for electrostatic applying to contact with the cooling drum and an unstreched film was obtained.

Next, before the stretch in the longitudinal direction, the film temperature was raised by the heating roll. Subsequently, the film was finally stretched 3.2 times longer in the longitudinal direction at the film temperature of 105°C. Immediately after the stretch, the film was cooled by the metal roll whose temperature was controlled at 40 °C. The film was then stretched 3.2 times wider in the breadth direction by the tenter type lateral stretch machine at the pre-heating temperature of 95°C and the stretch temperature of 120°C. The film was subjected to the heat treatment at 210°C for five seconds while relaxing by 4% in the breadth direction in the tenter machine, to obtain a biaxial orientated film of 13 µm in thickness.

The results of evaluation of thus obtained film are shown in the table 5. Exudations were observed in the course of high retort treatment of the film of this comparative example. Moreover, the film had poor heat resistance, showing a significant change in its color tone due to the repeated melting and extrusion. In addition, its quality was inferior, generating spots in the film color tone, when the retort treatment is performed in a state containing contents after the container formation.

**[Table 5]**

| | | Example 5 | Comparative Example 5 |
|---|---|---|---|
| Layer A | Resin | Polyester A 91wt% | Polyester A 86wt% |
| | | Particulate master a 4wt% | Particulate master a 4wt% |
| | | Pigment master 2 5wt% | Pigment master 7 10wt% |
| | Pigment | C.I. Pigment Yellow 180 | C.I. Pigment Yellow 191 |
| | Thickness(µm) | 11 | 11 |
| Layer B | Resin | Polyester B 96wt% | Polyester A 96wet% |
| | | Particulate master a 4wt% | Particulate master a 4wt% |
| | Thickness(µm) | 1(per 1 layer) | 1(per 1 layer) |
| Film total thick. (µm) | | 13 | 13 |
| Film total pigment concentration | | 0.42 wt% | 0.42 wt% |
| Molecular weight of added organic pigment | | 732 | 527 |
| Layer composition | | B/A/B | B/A/B |
| Film melting temperature (°C) | | 256 | 256 |
| Color tone | L* value | 90 | 90 |
| | a* value | -7 | -2 |
| | b* value | 21 | 17 |
| Dry heat deposition resistance | | ○ | ○ |
| Wet-heat deposition resistance (1) | | ○ | × |
| Wet-heat deposition resistance (2) | | ○ | × |
| Heat-resistance of pigment | | A | B |
| Retort color changing resistance | | ○ | × |

### (15) Oligomer precipitation resistance

The film was adhered to a metal frame of 20 cm square by means of a double-coated tape, for executing a retort treatment for 120 minutes at 125 °C. The film surface state after the retort treatment was observed by finger contact and a scanning electron microscope (SEM) (magnifying power of 1000), and the oligomer precipitation resistance was evaluated according to the following criteria.
Class A: White powder does not contact with fingers during the hand contact, and oligomer is not observed by the SEM observation of the surface.
Class B: White powder does not adhere to fingers during the contact, however, oligomer precipitation was observed on the surface by the SEM observation of the surface.
Class C: White powder adhered to fingers during the hand contact.

### (16) Retort whitening resistance

The film is adhered to both faces of an aluminum plate (thickness 0.2 mm) heated to 270°C at the rate of 20m/minutes and quenched with water of 30°C, to produce a film lamination metal plate. Glass beaker of 0.3 dm³ in capacity containing 0.2 dm³ of water (20°C) were put on the samples of 10 cm square cut out from the metal plate to perform the retort treatment at 125°C for five minutes or at 110°C for five minutes respectively. The condition of the film surface, opposite to the surface that the beaker was put, was evaluated on the basis of the following criteria. It should be appreciated that the laminated film was adhered so that the layer (B) comes in contact with the aluminutesum plate.
Class A: No alteration of film.
Class B: No alteration of film at 110°C, however, polka-irregularitypots appeared at 125°C.
Class C: Polka-irregularitypots appeared on the film by the retort treatment at 110°C.

### (17) Pigment precipitation resistance

The film was adhered to the metal frame of 20 cm square by means of a double-coated tape, for executing a dry heat treatment of 180 minutes at 150°C in a hot air oven. The film surface was wiped after the heat treatment with an industrial wiper (KIMWIPES (Crecia Corporation made, Wiper S-200)) and evaluated according to the following criteria.
Class A: No change was observed on the wiper (no adhesion of pigment).
Class B: The wiper was colored with the coloring agent (Pigment has precipitated).

### (18) Color irregularity in width direction

The film is equally divided into 6 portions in the width direction and label their boundaries as the first position, the second position ..., and the seventh position from the end part. Then b* values of the second position and the fourth position (center of the film) were measured at 5 points respectively in the longitudinal direction of the film and the difference of mean values of the b* values at the respective positions were evaluated by the following criteria.
Class A: The difference of b* values was less than 2.
Class B: The difference of b* values was 2 to 5.
Class C: The difference of b* values was 5 or more.

### (Manufacturing method of polyester)

The polyester resin used for the following experiment was manufactured as follows.

### (Polyester C)

0.04 weight parts of manganese acetate and 0.03 weight parts of antimony trioxide were added to a mixture of 100 weight parts of dimethyl terephthalate and 70 weight parts of ethylene glycol and heated gradually to exert an transesterified reaction in the end while distilling methanol at 220°C. Next, 0.025 weight parts of phosphoric acid 85% aqueous solution were added and heated gradually to 290°C, depressurized down to 1hPa finally, and a condensation polymerization reaction was executed until the intrinsic viscosity became 0.65, before discharged to form in the strand-like state to be cooled and cut out to obtain polyethylene terephthalate resin.

### (Polyester D)

The solid-state polymerization of the aforementioned polyester was executed under the decompression of 1hPa at 230°C, until the intrinsic viscosity became 0.72, by using a rotation type vacuum polymerization machine, to obtain Polyester B.

### (Polyester E)

0.06 weight parts of magnesium acetate, 0.16 weight parts of lithium acetate and 0.04 weight parts of antimony trioxide were added to a mixture of 100 weight parts of dimethyl terephthalate, 8 weight parts of dimethyl 5-sodium sulfoisophthalate and 82 weight parts of ethylene glycol and heated gradually and the transesterified reaction was executed while distilling methanol out of the system at 220°C. Next, 0.045 weight parts of phosphoric acid 85% aqueous solution and 1,1 weight part of polyethylene glycol of 1000 in number-average molecular weight were added, heated gradually, decompressed and eventually heated and decompressed to 290°C, 1hPa, the condensation polymerization was executed until the intrinsic viscosity became 0.54, before discharging in the strand shape, cooling and cutting to obtain a polyethylene terephthalate resin where 5-sodium sulfoisophtalic acid is copolymerized by 5 mol %.

### (Polyester F)

0.06 weight parts of magnesium acetate were added to a mixture of 100 weight parts of dimethyl terephthalate, 15 weight parts of 5-sodium sulfoisophtal acid dimethyl and 80 weight parts of ethylene glycol, and 0.16 weight parts of lithium acetate and 0.04 weight parts of antimony trioxide were added and heated gradually and finally, the transesterified reaction was executed by distilling methanol out of the system at 220°C. Next, 0.045 weight parts of phosphoric acid 85% aqueous solution were added, heated gradually, decompressed and eventually heated and decompressed to 290°C, 1hPa, the condensation polymerization was executed until the intrinsic viscosity became 0.67, before discharging in the strand shape, cooling and cutting to obtain a polyethylene terephthalate resin where 5-sodium sulfoisophthalic acid is copolymerized by 10 mol %.

### (Polyester G)

0.04 weight parts of manganese acetate were added to a mixture of 100 weight parts of dimethyl terephthalate, 70 weight parts of ethylene glycol and 7 weight parts of 1,4-cyclohexane dimethanol, heated gradually and finally, the transesterified reaction was executed by distilling 220°C methanol. Next, 0.045 weight parts of phosphoric acid 85% aqueous solution and 0.015 weight parts of germanium dioxide were added, heated gradually, decompressed and eventually heated and decompressed to 275°C, 1hPa, the condensation polymerization was executed until the intrinsic viscosity became 0.67, before discharging in the strand shape, cooling and cutting to obtain a polyethylene terephthalate resin where 1,4-cyclohexane dimethanol is copolymerized by 10 mol %. The polymer was cut into a cube of 3 mm in diameter, and the solid-state polymerization was executed until the intrinsic viscosity became 0.8 at 225°C, under the decompression of 1hPa, by using a rotation type vacuum polymerization machine, to obtain Polyester D.

### (Polyester H)

0.04 weight parts of manganese acetate were added to a mixture of 100 weight parts of dimethyl terephthalate, 60 weight parts of ethylene glycol and 60 weight parts of 1,4-cyclohexane dimethanol, heated gradually and finally, the transesterified reaction was executed by distilling 220°C methanol. Next, 0.045 weight parts of phosphoric acid 85% aqueous solution and 0.015 weight parts of germanium dioxide were added, heated gradually, decompressed and eventually heated and decompressed to 265°C, 1hPa, the condensation polymerization was executed until the intrinsic viscosity became 0.82, before discharging in the strand shape, cooling and cutting to obtain a polyethylene terephthalate resin where 1,4-cyclohexane dimethanol is copolymerized by 30 mol %.

### (Polyester I)

Polyester F and polyester A were blended by 70 : 30 in weight ratio and, thereafter, melted and kneaded by a vent-typebiaxial extruder to be extruded into a strand-like state, then cooled and solidified in the water and cut into a pellet shape by a cutter to obtain Polyester I.

### (Polyester J)

Polyester G and polyester H were blended by 9 : 1 in weight ratio and, thereafter, melted and kneaded by the vent-type biaxial extruder, and pelletized by a strand cutter to obtain Polyester J.

### (Polyester K)

0.08 weight parts of manganese acetate and 0.022 weight parts of antimony trioxide were added to a mixture of 82.5 weight parts of dimethyl terephthalate, 17.5 weight parts of dimethyl isophthaliate and 67 weight of ethylene glycol, heated gradually and finally, the transesterified reaction was executed by distilling 220°C methanol. Next, 0.019 weight parts of phosphoric acid 85% aqueous solution were added, heated gradually, decompressed and eventually heated and decompressed to 280°C, 1hPa, the condensation polymerization was executed until the intrinsic viscosity became 0.7, before discharging in the strand shape, cooling and cutting to obtain a polyethylene terephthalate resin where isophthalic acid is copolymerized by 30 mol %.

Composition and cyclic trimer quantity of prepared polymers are shown in table 6. Film was manufactured using these polyester resins and particles and pigment masters mentioned below and evaluated.

**[Table 6]**

| Polymer Name | Composition | Limiting viscosity | Fusion point (°C) | Cyclic Trimer (wt %) |
|---|---|---|---|---|
| Polyester C | Polyethylene terephthalate | 0.65 | 255 | 1.13 |
| Polyester D | Polyethylene terephthalate | 0.72 | 255 | 0.65 |
| Polyester E | SSIA 5 mol % copolymerized PET (PEG added) | 0.54 | 246 | 1.11 |
| Polyester F | SSIA 5 mol % copolymerized PET | 0.67 | 232 | 1.02 |
| Polyester G | CHDM 4 mol % copolymerized PET | 0.80 | 247 | 0.44 |
| Polyester H | CHDM 30 mol % copolymerized PET | 0.82 | - | 0.35 |
| Polyester I | CHDM 20 mol % contained PET | 0.73 | 210 | 0.46 |
| Polyester J | CHDM 6.4 mol % contained PET | 0.77 | 248 | 0.38 |
| Polyester K | Isophthalic acid 17.5 mol % copolymerized PET | 0.70 | 220 | 0.62 |

| | | | | |
|---|---|---|---|---|
| Symbols in table 6 stand for as follows: SSIA: 5-sodium sulfoisophthalic acid PET: Polyethylene terephthalate PEG: Polyethylene glycol CHDM: 1,4-cyclohexane dimethanol | | | | |

### (Particulate master b)

0.04 weight parts of manganese acetate and 0.03 weight parts of antimony trioxide were added to a mixture of 100 weight parts of dimethyl terephthalate and 67 weight of ethylene glycol, heated gradually and finally, the transesterified reaction was executed by distilling 220°C methanol. Then, 0.025 weight parts of phosphoric acid 85% aqueous solution were added and, moreover, ethylene glycol slurry of agglomerated silica particle of 2.2 µm in mean secondary particulate diameter was added such that the particulate concentration became 2 weight %, and heated gradually to 290 °C and depressurized down to 70 Pa finally, a condensation polymerization was executed until the intrinsic viscosity became 0.63, before discharging in the strand shape, cooling and cutting to obtain a particulate master.

### (Pigment master 8)

Polyester C was frozen to be crushed into powder and 5 weight % of organic pigment with Color-Index Pigment Yellow 180 (PV Fast Yellow HG made by Clariant, molecular weight 732) were added thereto to be blended uniformly. Then a biaxial bent type extruder was provided to melt and knead the mixture and extruded the mixture in a strand-like state, and cut into chips after cooling in the water, to obtain the pigment master.

### (Pigment master 9)

Polyester C was frozen and crushed into powder, 4 weight % of organic pigment Color-Index Pigment Yellow 95 (Cromphtal Yellow GR made by NAGASE & Co., Ltd., molecular weight 917) were added thereto, blended uniformly, supplied to the biaxial vent-type extruder, melted, kneaded and extruded into the strand shape, cooled in the water and cut into chips to obtain the pigment master.

### (Pigment master 10)

Polyester C was frozen and crushed into powder, 5 weight % of organic pigment Color-Index Pigment Yellow 147 (Polysynthren Yellow NG made by Clariant, molecular weight 600) were added thereto, blended uniformly, supplied to a biaxial vent-type extruder, melted, kneaded and extruded in the strand shape, cooled in the water and cut into chips to obtain the pigment master.

### Example 6

A two-layered laminated film was formed of a layer (A) containing organic pigments and a layer (B) not containing them. As polyester resin composing the layer (A), a polyester C, a polyester J, a particulate master b and a pigment master 8 were used by blending by a weight ratio of 27:60:3:10. As polyester composing the layer (B), a polyester E and a particulate master b were used by blending in a weight ratio of 97:3. Respectively blended polyester resins were independently dried at 180 °C for 4 hours by a vacuum dryer for eliminating humidity sufficiently. The resins then supplied to the separate uniaxial extruders, melted at 280 °C, let pass through the filter and the gear pump via the respective passages for the foreign matter elimination and the extrusion amount equalization and, thereafter, lamination as layer A/ layer B (layer thickness ratio 11:2) in the feed block installed in the upper part of a T die. The sheet-shaped layer discharged onto the cooling drum whose temperature was controlled at 25°C from the T die. At this time, the wire-like electrode of 0.1 mm in diameter was used for electrostatic applying to contact with the cooling drum and an unstreched film was obtained. Next, before stretching in the longitudinal direction, the film temperature was raised by the heating roll. The film was finally stretched 3.2 times longer in the longitudinal direction at the film temperature of 105°C. Immediately after the stretch, the film was cooled by the metal roll whose temperature was controlled at 40°C. The film was then stretched 3.2 times wider in the breadth direction by the tenter type lateral stretch machine at the pre-heating temperature of 95°C and the stretch temperature of 120°C. The film was then subjected to a heat treatment of 230°C for 5 seconds while relaxing by 4% in the breadth direction in the tenter machine, to obtain a biaxial orientated film of 13 µm in thickness.

### Example 7

A two-layered laminated film was formed of a layer (A) containing organic pigments and a layer (B) not containing them. As polyester composing the layer (A), a polyester C, a polyester G, a particulate master b and a pigment master 8 were used by blending in a weight ratio of 29:60:3:8. As polyester composing the layer (B), a polyester F and a particulate master b were used by blending in a weight ratio of 95:5. Respectively blended polyester resins were used to obtain a biaxial orientated film of 13 µm in thickness according to a process similar to the example 6.

### Example 8 (not forming part of the present invention)

A two-layered laminated film was formed of a layer (A) containing organic pigments and a layer (B) not containing them. As polyester composing the layer (A), a polyester C, a polyester I, a particulate master b and a pigment master 9 were used by blending in a weight ratio of 51:35:4:10. As polyester composing the layer (B), a polyester C and a polyester E and a particulate master b were used by blending in a weight ratio of 67:30:3. Respectively blended polyester resins were used to obtain a biaxial orientated film of 13 µm in thickness according to a process similar to the example 6.

### Example 9

A two-layered laminated film was formed of a layer (A) containing organic pigments and a layer (B) not containing them.

### Example 10 (not forming part of the present invention)

>

A single-layered film was formed of a layer (A) containing organic pigments. A polyester D, a polyester F, a particulate master b and a pigment master 8 were blended in a weight ratio of 57:30:3:10, to obtain a biaxial orientated film of 12 µm in thickness according to a process similar to the example 6 for the other conditions.

### Example 11

As polyester composing the layer (A) containing organic pigments, a polyester J, a particulate master b and a pigment master 8 were used by blending in a weight ratio of 92:2:6. As polyester composing the layer (B) not containing pigment, the same composition as the example 6 was adopted. Respectively blended polyester resins were used to obtain a biaxial orientated film of 12 µm in thickness according to the process similar to the example 6.

### Comparative Example 6

As polyester composing the layer (A), a polyester C, a particulate master b and a pigment master 10 were used by blending in a weight ratio of 87:3:10, to obtain a biaxial orientated film of 12 µm in thickness according to the process similar to the example 6 for the other conditions.

### Comparative Example 7

A two-layered laminated film was formed of a layer (A) containing organic pigments and a layer (B) not containing them. As polyester composing the layer (A), a polyester C, a polyester K, a particulate master b and a pigment master 8 were used by blending in a weight ratio of 50:40:4:6. As polyester composing the layer (B), a polyester D and a particulate master b were used by blending in a weight ratio of 95:5.

Respectively blended polyester resins were used to obtain a biaxial orientated film of 13 µm in thickness according to the process similar to the example 6.

### Comparative Example 8

40 weight parts of organic pigment Color-Index Pigment Yellow 180 (PV Fast Yellow HG made by Clariant, molecular weight 732) were added to 60 weight parts of Easter GN071 made by Eastman Chemical Company, which was frozen and crushed into powder, and kneaded at 110°C by means of a kneader to obtain a pre-master. Then, the pre-master and the polyester C were crushed and blended so that the pigment concentration in the resin be 20 weight parts and extruded by a vent-type biaxial extruder to obtain the pigment master 11.

This pigment master and the polyester D were blended in a weight ratio of 1:1 to make the layer (A) containing organic pigments. However, the film can not be obtained, as shearing heat is generated in the uniaxial extruder used for the example 1 and the resin cominutesg out of the T die contained expansion gas, possibly because the raw material concentration was high.

**[Table 7]**

| | | Example 6 | Example 7 | Example 8 |
|---|---|---|---|---|
| | Polymer Resin | Polyester C (27 wt%) | Polyester C (29 wt%) | Polyester C (51 wt%) |
| Layer (A) | to use | Polyester J (60 wt%) | Polyester G (60 wt%) | Polyester I(35 wt%) |
| | | Particulate master b (3wt%) | Particulate master b (3wt%) | Particulate master b (4wt%) |
| | | Pigment master 8 (10wt%) | Pigment master 8 (8wt%) | Pigment master 9 (10wt%) |
| | Copolymerization rate (mol %) | 3.8 | 2.4 | 6.7 |
| | Cyclic trimer (wt%) | 0.68 | 0.71 | 0.88 |
| | Organic pigment qty (wt%) | 0.5 | 0.4 | 0.4 |
| | Layer (A) Thickness(µm) | 11 | 11 | 11 |
| Layer (B) | Polymer Resin to use | Polyester E (97wt%) | Polyester F (95wt%) | Polyester C (67 wt%) |
| | | | | Polyester E (30 wt%) |
| | | Particulate master b (3wt%) | Particulate master b (5wt%) | Particulate master b (3wt%) |
| | Water absorption (%) | 1.2 | 0.4 | 0.1 |
| | Content of residue having alkali metal sulfonate (mol %) | 4.8 | 9.5 | 1.5 |
| | Layer (B) Thickness (µm) | 2 | 2 | 1 |
| Film total thick. (µm) | | 13 | 13 | 12 |
| Layer composition | | A/B | A/B | A/B |
| L* value | | 91 | 91 | 86 |
| a* value | | -7 | -6 | 7 |
| b* value | | 22 | 18 | 14 |
| Oligomer precipitation resistance | | A | A | B |
| Retort whitening resistance | | A | A | B |
| Pigment deposition resistance | | A | A | A |
| Color spot in width | | A | B | A |

**[Table 8]**

| | | Example 9 | Example 10 | Example 11 |
|---|---|---|---|---|
| Layer (A) | Polymer Resin to use | Polyester C (25 wt%) | Polyester D (57 wt%) | Polyester J (92 wt%) |
| | | Polyester J (60 wt%) | Polyester F (30 wt%) | Particulate master b (2wt%) |
| | | Particulate master b (3wt%) | Particulate master b (3wt%) | |
| | | | | Pigment master 8 (6 wt%) |
| | | Pigment master 8 (12wt%) | Pigment master 8 (10 wt%) | |
| | Copolymerization rate (mol %) | 3.7 | 2.9 | 5.9 |
| | Cyclic trimer (wt%) | 0.69 | 0.86 | 0.49 |
| | Organic pigment qty (wt%) | 0.6 | 0.5 | 0.3 |
| | Layer (A) Thickness (µm) | 10 | 12 | 10 |
| Layer (B) | Polymer Resin to use | Polyester E (70wt%) | | Polyester E (97 wt%) |
| | | Polyester F (27wt%) | - | |
| | | Particulate master b (3wt%) | | Particulate master b (3wt%) |
| | Water absorption (%) | 0.7 | - | 1.2 |
| | Content of residue having alkali metal sulfonate (mol %) | 6.2 | - | 4.8 |
| | Layer (B) Thickness (µm) | 2 | - | 2 |
| Film total thick. (µm) | | 12 | 12 | 12 |
| Layer composition | | A/B | A | A/B |
| L* value | | 89 | 90 | 92 |
| a* value | | -7 | -7 | -4 |
| b* value | | 25 | 23 | 13 |
| Oligomer precipitation resistance | | A | B | A |
| Retort whitening resistance | | A | B | A |
| Pigment deposition resistance | | A | A | A |
| Color spot in width | | A | A | A |

**[Table 9]**

| | | Comparative Example 6 | Comparative Example 7 | Comparative Example 8 |
|---|---|---|---|---|
| Layer (A) | Polymer Resin to use | Polyester C (87 wt%) | Polyester C (50 wt%) | Polyester J (50 wt%) |
| | | Particulate master b (3wt%) | Polyester K (40 wt%) | |
| | | | Particulate master b (4wt%) | |
| | | Pigment master 10(10wt%) | | Pigment master 11(50wt%) |
| | | | Pigment master 8 (6wt%) | |
| | Copolymerization rate (mol %) | 0 | 7.0 | 3.5 |
| | Cyclic trimer (wt%) | 1.2 | 0.95 | 0.77 |
| | Organic pigment qty (wt%) | 0.5 | 0.3 | 10 |
| | Layer (A) Thickness(µm) | 12 | 11 | |
| Layer (B) | Polymer Resin to use | - | Polyester D (95wt%) | Polyester E (97 wt%) |
| | | | Particulate master b (5wt%) | Particulate master b (3wt%) |
| | Water absorption (%) | - | 0.1 | 1.2 |
| | Content of residue having alkali metal sulfonate (mol %) | - | 0 | 4.8 |
| | Layer (B) Thickness(µm) | - | 2 | |
| Film total thick. (µm) | | 12 | 13 | - |

| Layer composition | | A | A/B | A/B |
|---|---|---|---|---|
| L* value | | 92 | 92 | - |
| a* value | | -8 | -5 | - |
| b* value | | 25 | 15 | - |
| Oligomer precipitation resistance | | C | C | - |
| Retort whitening resistance | | C | C | - |
| Pigment deposition resistance | | B | B | - |
| Color spot in width | | A | B | - |

As shown in tables 7 and 8, examples where the co-polymerization amount and the cyclic trimer content were within the scope of the present invention, no or little white powder due to the oligomer precipitation was observed even if the retort treatment was performed and presented an excellent aspect. On the other hand, as shown in table 9, white powder due to the oligomer was observed, deteriorating the aspect. Besides, in the Comparative example 8, even a film could not be made.

According to the present invention, a polyester film which has no elusion of organic pigments contained in the film on the film surface, even when heat treatment or the like applied, is provided. The film is also shows an excellent reproducibility of its color tone which is free from change in its color tone due to repeated heating, melting, and extrusion since the pigments has an excellent heat resistance.

Moreover, the film according to the present invention has an excellent design by coloring with organic pigment not only by containing a certain amount of organic pigments, but also by setting the amount of ethylene terephthalate cyclic trimer to a specified concentration. In addition, white powder generated by precipitation and crystallization of oligomer on the film surface can be reduced even when dry heating or moist heating for the sterilization of the film before molding into a packing bag, of a container itself after molded from the film adhered to a base material or other materials and so on, and of contents in the container after charging the contents.

Consequently, the film of the present invention can be preferably used as a polyester film with excellent appearance and design which is particularly suitable for the application as a packaging material.

## Claims

1. A polyester film comprising a polyester resin layer A and another polyester resin layer B, wherein the layer A contains organic pigment of 0.01 to 5 weight %, **characterized in that** said organic pigment is Color-Index Pigment Yellow 180 having a molecular weight of 732, and at least one side of the layer A is laminated with said layer B without said organic pigment whose thickness is 0.1 to 3 µm.

2. The polyester film of claim 1, wherein the polyester resin layer B has a water absorption rate of 0.3 weight % or more.

3. The polyester film of claim 1 or claim 2, wherein the polyester resin layer B contains residue of 1 to 20 mol % of alkali metal sulfonate.

4. The polyester film of claim 3, wherein the intrinsic viscosity of the polyester resin composing the polyester resin layer A is 0.5 to 0.8 and the intrinsic viscosity of the polyester resin composing the polyester resin layer B is lower than the intrinsic viscosity of the polyester resin layer A by 0.01 to 0.2.

5. The polyester film of any preceding claim, wherein the thickness of the layer B is 0.5 to 3 µm.

6. A laminated structure comprising the polyester film of any preceding claim laminated on a metal plate.

## Patentansprüche

1. Polyesterfilm umfassend eine Poyesterharzschicht A und eine andere Polyesterharzschicht B, wobei die Schicht A organisches Pigment von 0,01 bis 5 Gew.-% enthält, **dadurch gekennzeichnet, dass** das organische Pigment Farbindex-Pigment Gelb 180 ist, das ein Molekulargewicht von 732 aufweist, und mindestens eine Seite der Schicht A mit der Schicht B ohne das organische Pigment, dessen Dicke 0,1 bis 3 µm beträgt, laminiert ist.

2. Polyesterfilm nach Anspruch 1, wobei die Polyesterharzschicht B eine Wasserabsorptionsrate von 0,3 Gew.-% oder mehr aufweist.

3. Polyesterfilm nach Anspruch 1 oder Anspruch 2, wobei die Polyesterharzschicht B einen Rest von 1 bis 20 Mol-% Alkalimetallsulfonat enthält.

4. Polyesterfilm nach Anspruch 3, wobei die intrinsische Viskosität des Polyesterharzes, das die Polyesterharzschicht A bildet, 0,5 bis 0,8 beträgt und die intrinsische Viskosität des Polyesterharzes, das die Polyesterharzschicht B bildet, 0,01 bis 0,2 niedriger ist als die intrinsische Viskosität der Polyesterharzschicht A.

5. Polyesterfilm nach einem der vorhergehenden Ansprüche, wobei die Dicke der Schicht B 0,5 bis 3 µm beträgt.

6. Laminierte Struktur umfassend den Polyesterfilm nach einem der vorhergehenden Ansprüche, der auf eine Metallplatte laminiert ist.

## Revendications

1. Film de polyester comprenant une couche de résine de polyester A et une autre couche de résine de polyester B, dans lequel la couche A contient un pigment organique à hauteur de 0,01 à 5 % en poids, **caractérisé en ce que** ledit pigment organique est le pigment Yellow 180 du répertoire des colorants (Colour Index) ayant un poids moléculaire de 732, et au moins un côté de la couche A est stratifiée avec ladite couche B sans ledit pigment organique dont l'épaisseur est de 0,1 à 3 µm.

2. Film de polyester selon la revendication 1, dans lequel la couche de résine de polyester B a un taux d'absorption d'eau de 0,3 % en poids ou plus.

3. Film de polyester selon la revendication 1 ou la revendication 2, dans lequel la couche de résine de polyester B contient un résidu de 1 à 20 % en moles de sulfonate de métal alcalin.

4. Film de polyester selon la revendication 3, dans lequel la viscosité intrinsèque de la résine de polyester constituant la couche de résine de polyester A est de 0,5 à 0,8 et la viscosité intrinsèque de la résine de polyester constituant la couche de résine de polyester B est inférieure à la viscosité intrinsèque de la couche de résine de polyester A de 0,01 à 0,2.

5. Film de polyester selon l'une quelconque des revendications précédentes, dans lequel l'épaisseur de la couche B est de 0,5 à 3 µm.

6. Structure stratifiée comprenant le film de polyester selon l'une quelconque des revendications précédentes stratifié sur une plaque métallique.
